# FASCICULE DE BREVET EUROPEEN

(11) **EP 3 284 220 B1**
(45) Date de publication et mention de la délivrance du brevet: **20.03.2019**
(21) Numéro de dépôt: 16720903.0
(22) Date de dépôt: 12.04.2016
(51) Int. Cl.: H04L 12/28, H04L 12/413, H04L 12/433, H04L 12/40, G05B 15/02

(54) **PROCÉDÉ ET DISPOSITIF DE COMMUNICATION DANS UN RÉSEAU DOMOTIQUE**
VERFAHREN UND VORRICHTUNG ZUR KOMMUNIKATION IN EINEM HAUSAUTOMATIONSNETZWERK
METHOD AND DEVICE FOR COMMUNICATION IN A HOME AUTOMATION NETWORK

(30) Priorité: 14.04.2015 FR 1553273
(43) Date de publication de la demande: 21.02.2018
(73) Titulaire: El Abbouti, Abdelmajid, 01200 Bellegarde sur Valserine (FR)
(72) Inventeur: El Abbouti, Abdelmajid, 01200 Bellegarde sur Valserine (FR)
(74) Mandataire: Cabinet Poncet
(86) Numéro de dépôt international: PCT/IB2016/052067
(87) Numéro de publication internationale: WO 2016/166657

(56) Documents cités:
- EP-A1- 0 005 045
- US-A- 5 307 350

## Description

### DOMAINE TECHNIQUE DE L'INVENTION

La présente invention concerne un procédé, un dispositif, et une installation domotique, dans un environnement de systèmes domotiques destinés à piloter des organes dans un ensemble immobilier.

L'invention concerne plus particulièrement les systèmes domotiques dans lesquels des équipements peuvent échanger des informations sur leur état et leur fonctionnement entre eux ou avec un système de contrôle centralisé ou non.

Dans l'industrie automobile, pour réduire le nombre de conducteurs électriques devant relier les éléments actifs les uns aux autres et au système de commande, on a développé un réseau local basé sur un bus constitué d'une paire de conducteurs torsadés ou coaxiaux ou sur une fibre optique, auquel sont connectés des éléments actifs comportant une interface électronique à microcontrôleur. Par exemple, un tel réseau local peut être constitué sur la base du contrôleur de communication série Intel 82526, dans lequel les échanges d'informations entre les éléments actifs se déroulent selon un protocole normalisé appelé CAN (« Controller Area Network »).

Un tel réseau local est bien adapté à l'industrie automobile, pour être embarqué sur les véhicules automobiles.

Toutefois, un tel réseau n'est pas particulièrement bien adapté à la commande des systèmes domotiques, dans la mesure où les organes actifs des systèmes domotiques présentent des particularités et des besoins qui diffèrent de ceux qui caractérisent les véhicules automobiles.

En particulier, le format fixe des messages échangés selon le protocole CAN, bien que satisfaisant pour un usage dans un véhicule automobile, est trop limité par le nombre d'objets connectables autorisés, par les informations transmissibles dont le volume est trop faible pour les communications qui sont nécessaires entre des organes actifs des systèmes domotiques, et il ne permet pas de gérer les priorités des alarmes.

On connaît du EP 0 005 045 A un système de communication entre plusieurs équipements sur un réseau, les équipements ayant chacun une interface électronique, les communications étant établies au moyen de messages transmis sur le réseau sous forme de trame comprenant une pluralité de segments fonctionnels. La trame des messages comprend un segment de début de message, un segment d'adresse, un segment de données, un segment de contrôle contenant une clé calculée en fonction des signaux constituant le message, et un signal binaire de fin de message. Lors des communications, le réseau prend soit un état dominant, soit un état récessif.

Dans le dispositif décrit dans ce document, lorsque deux équipements commencent simultanément une transmission de messages, un autre équipement peut éventuellement détecter un faux message résultant de la combinaison des deux flux de signaux binaires émis par les deux équipements émetteurs. Le message peut être erroné parce que la combinaison des états dominants et récessifs produit toujours une suite de signaux binaires qui diffèrent de l'une à l'autre des suites de signaux binaires émises par les deux émetteurs. Un autre équipement peut alors interpréter par erreur le message reçu comme lui étant destiné. Cet autre équipement peut alors confirmer qu'il a bien reçu le premier message et qu'il est prêt à recevoir les données. Le ou les équipements émetteurs émettent alors les données, et il en résulte un fonctionnement défectueux de l'ensemble du dispositif de transmission de messages.

Le document mentionne la possibilité de telles erreurs, et n'apporte aucune solution permettant d'éviter de telles erreurs.

### EXPOSE DE L'INVENTION

Un premier problème proposé par la présente invention est de concevoir un réseau local de type bus qui soit particulièrement bien adapté au pilotage des éléments actifs d'un système domotique, en garantissant la possibilité de connecter un grand nombre d'objets ou éléments actifs, et en garantissant la possibilité d'interruptions en cas de besoin sans qu'aucun objet puisse monopoliser le bus, pour gérer les priorités des alarmes.

Un autre problème est de concevoir un réseau local de type bus qui soit aisément paramétrable lors de l'installation dans un système domotique particulier, notamment pour gérer des priorités.

On cherche en outre à concevoir un réseau local fiable, capable de transmettre les instructions et informations rapidement et sans erreur.

Dans la description et les revendications, le terme « bus » est utilisé pour désigner indifféremment un réseau local filaire à base de conducteurs torsadés ou coaxiaux, ou un réseau local à base de fibre optique, ou un réseau local à base de transmission par ondes (radio, sonores ou lumineuses par exemple).

Pour atteindre ces buts ainsi que d'autres, l'invention propose, selon un premier aspect, un procédé de communication dans un réseau domotique selon la revendication 1. Il permet la communication entre acteurs du réseau ayant chacun une interface électronique à programme de communication et associés à des équipements dans un bâtiment, au moyen de messages transmis sur le réseau sous forme de trame comprenant une pluralité de segments fonctionnels,
dans lequel ladite trame de message comprend :
- un segment de début de message,
- un segment d'adresse,
- un segment d'indication de longueur des données,
- un segment de données,
- un segment de contrôle, contenant une clé calculée en fonction des signaux constituant le message,
- un signal binaire de fin de message,
dans lequel le segment de début de message (BDP, PE) comporte un signal binaire de début de message (BDP) suivi d'un temps de repos (PE),
et dans lequel :
- avant d'émettre un message, l'acteur doit scruter la présence éventuelle de messages sur le réseau et doit, après avoir constaté l'absence de messages sur le réseau, émettre un signal binaire de début de message puis attendre un temps de repos dont la durée lui a été affectée de manière unique, et ne poursuivre l'émission de son message sur le réseau que si aucun autre message n'est apparu sur le réseau pendant ledit temps de repos.

Du fait que le temps de repos est obligatoire et que la durée de temps de repos est affectée de manière unique à chaque acteur du réseau, les conflits en cas d'envoi de plusieurs messages simultanés sur le réseau sont gérés de manière automatique en fonction de l'ordre de priorité défini par la durée du temps de repos : les acteurs bénéficiant d'une durée de temps de repos plus courte ont automatiquement priorité sur les acteurs bénéficiant d'une durée de temps de repos plus longue, car ils peuvent émettre plus rapidement un nouveau message en forçant ainsi les autres acteurs à attendre la fin des messages prioritaires. Lors du paramétrage du réseau, il est ainsi possible d'affecter aux acteurs prioritaires une durée courte de temps de repos. On évite de façon certaine les défauts de fonctionnement constatés sur les équipements de l'art antérieur notamment lors d'une collision entre les débuts de messages de plusieurs émetteurs simultanés.

Pour affecter de manière unique une durée de temps de repos à chaque acteur du réseau, on peut notamment calculer les durées de temps de repos en se basant sur le segment d'adresse des acteurs du réseau.

Selon une réalisation avantageuse, on peut prévoir que :
- le segment de données du message est organisé en un nombre entier de colis composés chacun d'un signal binaire de début de colis, d'un signal binaire de fin de colis, et de 64 signaux binaires de données,
- le segment d'indication de longueur des données du message est constitué par ledit nombre entier de colis composant ledit segment de données du message.

De la sorte, la longueur des messages est essentiellement variable, et peut être aisément adaptée aux volumes de données nécessaires pour piloter les organes actifs d'un système domotique.

On peut avantageusement limiter à 16 le nombre de colis présents dans un message, afin d'éviter que les acteurs prioritaires soient perturbés par un délai d'attente excessif pour attendre la fin de transmission d'un message en cours.

Pour faciliter le paramétrage du réseau local lors de son installation, on peut avantageusement prévoir que la durée du temps de repos affectée à chaque acteur est une fonction croissante du nombre constituant l'adresse dudit acteur.

De la sorte, il suffit de choisir de façon appropriée les adresses des différents acteurs, celles-ci définissant simultanément l'ordre de priorité.

Pour fiabiliser la transmission de données dans le réseau domotique, tout en respectant les priorités, on peut avantageusement prévoir que, lors de la transmission d'un message sur le réseau entre un acteur émetteur et un acteur destinataire :
- après la fin d'envoi du message sur le réseau, l'acteur émetteur scrute les messages sur le réseau et attend la réception d'un message d'accusé de réception,
- à la réception du message qui lui est destiné sur le réseau, l'acteur destinataire effectue une séquence de contrôle par comparaison entre les données du message et la clé contenue dans le segment de contrôle du message,
- si la comparaison entre les données du message et la clé est satisfaisante, l'acteur destinataire envoie sur le réseau à l'acteur émetteur un message de bonne réception,
- si la comparaison entre les données du message et la clé n'est pas satisfaisante, l'acteur destinataire envoie sur le réseau à l'acteur émetteur un message d'erreur,
- à réception d'un message de bonne réception, l'acteur émetteur s'abstient de toute autre émission sur le réseau pendant sa séquence d'attente,
- à réception d'un message d'erreur, l'acteur émetteur s'abstient d'émettre sur le réseau pendant sa séquence d'attente, puis reprend si possible la transmission de son message sur le réseau.

En alternative, toujours pour fiabiliser la transmission de données dans le réseau domotique, tout en respectant les priorités, dans le cadre de l'objet de la revendication 1, on peut avantageusement prévoir que, lors de la transmission d'un message sur le réseau entre un acteur émetteur et un acteur destinataire :
- après la fin d'envoi du message sur le réseau, l'acteur émetteur scrute les messages sur le réseau et attend la réception d'un message d'accusé de réception,
- à la réception du message qui lui est destiné sur le réseau, l'acteur destinataire effectue une séquence de contrôle par comparaison entre les données du message et la clé contenue dans le segment de contrôle du message,
- si la comparaison entre les données du message et la clé est satisfaisante, l'acteur destinataire envoie sur le réseau à l'acteur émetteur un message de bonne réception,
- à réception d'un message de bonne réception, l'acteur émetteur s'abstient de toute autre émission sur le réseau pendant sa séquence d'attente,
- en l'absence de réception d'un message de bonne réception pendant une durée prédéterminée, l'acteur émetteur émet à nouveau son message sur le réseau.

Dans cette alternative, si la comparaison entre les données du message et la clé n'est pas satisfaisante, l'acteur destinataire n'envoie aucun message sur le réseau. C'est l'acteur émetteur qui, n'ayant pas reçu de message de bonne réception pendant une durée prédéterminée (correspondant par exemple au temps de retour d'un message de bonne réception), émet à nouveau son message sur le réseau.

Avantageusement, au bout d'un nombre prédéterminé d'envois infructueux du message sur le réseau (aucun message de bonne réception n'ayant été reçu par l'acteur émetteur), l'acteur émetteur peut émettre un message de dysfonctionnement de l'acteur destinataire à l'attention des autres acteurs émetteurs du réseau ou à l'attention d'un système de contrôle centralisé (ou non centralisé) chargé de mémoriser et indexer les éventuels dysfonctionnements des acteurs destinataires en vue d'opérations de maintenance.

D'autre part, lorsqu'il n'a pas de message à émettre, chacun des acteurs exécute une séquence d'attente courante au cours de laquelle :
- l'acteur scrute la présence de messages sur le réseau,
- en présence d'un message, l'acteur compare le contenu du segment d'adresse dudit message avec sa propre adresse,
- en cas de différence entre le contenu du segment d'adresse dudit message et sa propre adresse, l'acteur se remet en séquence d'attente courante,
- en cas d'identité entre le contenu du segment d'adresse dudit message et sa propre adresse, l'acteur entreprend une séquence de contrôle, par comparaison entre les données du message et la clé contenue dans le segment de contrôle du message,
- si la comparaison entre les données du message et la clé n'est pas satisfaisante, l'acteur destinataire envoie sur le réseau à l'acteur émetteur un message d'erreur, et se remet en séquence d'attente courante,
- si la comparaison entre les données du message et la clé est satisfaisante, l'acteur destinataire envoie sur le réseau à l'acteur émetteur un message de bonne réception, puis exploite les données du message.

Selon un autre aspect, pour atteindre ces buts ainsi que d'autres, l'invention propose un dispositif de communication dans un réseau domotique selon la revendication 7. Il permet la communication entre des acteurs du réseau ayant chacun une interface électronique à programme de communication et associés à des équipements dans un bâtiment, au moyen de messages transmis sur le réseau sous forme de trame comprenant une pluralité de segments fonctionnels,
dans lequel ladite trame de message comprend :
- un segment de début de message,
- un segment d'adresse,
- un segment d'indication de longueur des données,
- un segment de données,
- un segment de contrôle, contenant une clé calculée en fonction des signaux constituant le message,
- un signal binaire de fin de message,
dans lequel le segment de début de message (BDP, PE) comporte un signal binaire de début de message (BDP) suivi d'un temps de repos (PE),
et dans lequel :
- le programme de communication de chacun des acteurs comprend une séquence d'attente initiale selon laquelle, avant d'émettre un message, l'acteur doit scruter la présence éventuelle de messages sur le réseau et doit, après avoir constaté l'absence de messages sur le réseau, émettre un signal binaire de début de message puis attendre un temps de repos dont la durée lui a été affectée de manière unique, et ne poursuivre l'émission de son message sur le réseau que si aucun autre message n'est apparu sur le réseau pendant ledit temps de repos.

Dans un tel dispositif, on peut avantageusement prévoir que :
- le segment de données du message est organisé en un nombre entier de colis composés chacun d'un signal binaire de début de colis, d'un signal binaire de fin de colis, et de 64 signaux binaires de données,
- le segment d'indication de longueur des données du message est constitué par ledit nombre entier de colis composant ledit segment de données du message.

Également, on peut prévoir que ledit nombre entier de colis est inférieur ou égal à 16.

Selon une réalisation avantageuse, on peut prévoir que le programme de communication de chacun des acteurs comprend une séquence de calcul du temps de repos, selon laquelle le temps de repos est calculé en fonction du nombre constituant l'adresse dudit acteur. La séquence de calcul peut ainsi être utilisée lors du paramétrage d'un nouveau réseau domotique, en choisissant de manière appropriée les adresses pour définir les priorités des acteurs.

De préférence, le programme de communication de chacun des acteurs comprend une séquence d'attente de réception selon laquelle, après la fin d'envoi d'un message sur le réseau, l'acteur scrute les messages sur le réseau et attend la réception d'un message d'accusé de réception.

En complément, on peut avantageusement prévoir que le programme de communication de chacun des acteurs comprend une séquence d'attente courante au cours de laquelle :
- l'acteur scrute la présence de messages sur le réseau,
- en présence d'un message, l'acteur compare le contenu du segment d'adresse dudit message avec sa propre adresse,
- en cas de différence entre le contenu du segment d'adresse dudit message et sa propre adresse, l'acteur se remet en séquence d'attente courante,
- en cas d'identité entre le contenu du segment d'adresse dudit message et sa propre adresse, l'acteur exploite le message.

Pour assurer une bonne fiabilité de transmission des messages, on peut prévoir que le programme de communication de chacun des acteurs comprend une séquence de contrôle, qui effectue une comparaison entre les données du message et la clé contenue dans le segment de contrôle du message, et à l'issue de laquelle :
- si la comparaison entre les données du message et la clé n'est pas satisfaisante, l'acteur destinataire envoie sur le réseau à l'acteur émetteur un message d'erreur, et se remet en séquence d'attente courante,
- si la comparaison entre les données du message et la clé est satisfaisante, l'acteur destinataire envoie sur le réseau à l'acteur émetteur un message de bonne réception, puis exploite les données du message.

Selon un autre aspect, l'invention propose une installation domotique selon la revendication 14.

Les revendications dépendantes définissent des modes de réalisation.

Le fonctionnement d'un dispositif de communication tel que défini ci-dessus, et le déroulement d'un procédé de communication tel que défini ci-dessus, ne sont pas incompatibles avec des étapes de fonctionnement en continu dans lesquelles un émetteur peut indiquer, dans un premier message suivant l'établissement d'une communication entre l'émetteur et un récepteur, que la transmission des données va ensuite s'effectuer de façon continue, jusqu'à épuisement, notamment pour transmettre un volume important de données dans un temps minimum. Dans ce cas, le premier message contient un segment d'indication de longueur des données qui informe le ou les récepteurs du caractère ininterrompu de la transmission subséquente des données.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique d'un réseau domotique selon un mode de réalisation de la présente invention ;
- la figure 2 illustre une trame de message et les signaux binaires correspondants, selon un mode de réalisation de la présente invention ;
- la figure 3 illustre la trame d'un colis de données dans un message selon un mode de réalisation de la présente invention ;
- la figure 4 illustre la trame d'un colis de données dans un message selon un mode de réalisation préféré de la présente invention, mieux adapté à la domotique ;
- la figure 5 illustre de façon plus détaillée les signaux binaires contenus dans la trame d'un colis selon la figure 4 ;
- la figure 6 illustre six exemples de messages destinés à la commande de divers acteurs du réseau domotique ; et
- la figure 7 est un organigramme illustrant les étapes essentielles de transmission d'un message selon un mode de réalisation de la présente invention.

### DESCRIPTION DES MODES DE REALISATION PREFERES

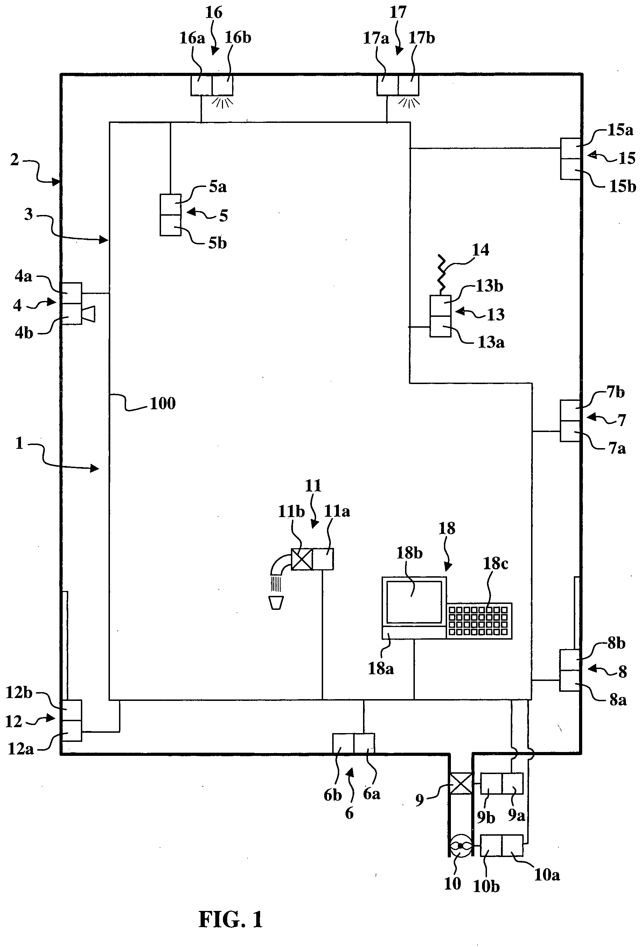

Dans le mode de réalisation illustré sur la figure 1, un système domotique est installé dans une habitation 2.

Le système domotique comprend de façon générale des acteurs 4-18 répartis dans l'habitation 2 et communiquant entre eux par un dispositif de communication 3 pour former un réseau domotique 1.

Dans l'exemple illustré, les acteurs du réseau domotique 1 comprennent une sirène d'alarme 4, un capteur biométrique 5, une caméra de surveillance 6, un capteur de mouvements 7, un capteur de fenêtre 8, un clapet d'admission d'air chaud 9, un ventilateur 10, une électrovanne 11 d'admission d'eau, un actionneur 12 de porte de garage, une commande d'alimentation 13 pour une résistance chauffante 14, une prise électrique commandée 15, des points lumineux commandés 16 et 17, et un dispositif de commande 18.

Chacun des acteurs 4-18 du réseau 1 comporte une interface électronique à programme de communication, fonctionnellement interposée entre l'équipement correspondant de l'acteur et un bus 100 sur lequel circulent les messages entre les acteurs.

Ainsi, la sirène d'alarme 4 comporte une interface électronique d'alarme 4a interposée entre le bus 100 et l'équipement fonctionnel 4b générant le signal sonore de l'alarme. De même : le capteur biométrique 5 comporte une interface électronique de capteurs biométriques 5a et les organes fonctionnels 5b du capteur ; la caméra 6 comporte une interface de caméra 6a et les organes de prise de vue 6b de la caméra ; le capteur de mouvements 7 comporte son interface électronique 7a et ses organes fonctionnels de capteur 7b ; le capteur de fenêtre 8 comporte son interface 8a et ses organes fonctionnels de capteur 8b ; le clapet 9 comporte son interface de clapet 9a et l'actionneur de clapet 9b ; le ventilateur 10 comporte son interface de ventilateur 10a et le moteur de ventilateur 10b ; l'électrovanne 11 comporte son interface d'électrovanne 11a et l'actionneur électromécanique d'électrovanne 11b; l'actionneur 12 de porte comporte son interface 12a et le moteur de porte 12b ; la commande d'alimentation 13 comporte son interface 13a et un commutateur électrique 13b connecté en série avec la résistance électrique 14 aux bornes de l'alimentation électrique du bâtiment ; la prise commandée 15 comporte son interface de prise 15a et un commutateur piloté 15b ; les points lumineux 16 et 17 comportent les interfaces électroniques respectives 16a et 17a et des commutateurs pour l'alimentation sélective des sources lumineuses 16b et 17b.

Le dispositif de commande 18 comporte une interface électronique de communication 18a fonctionnellement connectée au bus 100, un dispositif d'affichage 18b et un clavier 18c.

On comprendra que les acteurs 4-18 illustrés sur la figure 1 ne sont donnés qu'à titre illustratif, et qu'un dispositif domotique selon l'invention peut comprendre tous autres types d'acteurs susceptibles de faire partie d'un dispositif domotique connu ou d'un bâtiment.

On comprendra également que la plupart des acteurs 4-18 illustrés sur la figure 1 sont aptes non seulement à recevoir des messages, mais également à émettre des messages sur le réseau, et que certains des acteurs illustrés peuvent au contraire être inaptes à envoyer des messages sur le réseau 1. Dans la description qui suit, on supposera néanmoins que tous les acteurs sont aptes à émettre et recevoir des messages.

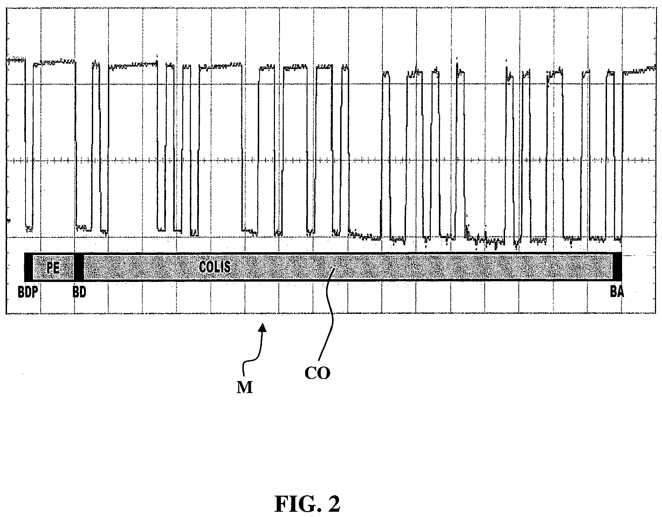

Entre les acteurs 4 à 18, les informations circulent sur le bus 100 sous forme de messages M constitués d'une suite de signaux binaires selon une trame déterminée ayant une pluralité de segments fonctionnels tels qu'illustrés sur les figures 2 à 5.

Dans cette trame du message M, on distingue sur la figure 2 :
- un segment de début de message BDP-PE, comportant un signal binaire de début de message BDP suivi d'un temps de repos PE caractérisé par une absence de signal et dont la longueur est déterminée par l'adresse de l'expéditeur, cette longueur permettant aux destinataires de reconnaître la provenance du message M,
- un colis de données CO, débutant par un signal binaire de début de colis BD,
- un signal binaire de fin de message BA.

La durée du temps de repos PE de l'expéditeur peut par exemple être déterminée par une table d'affectation prédéfinie dans laquelle on fait correspondre de façon unique un temps de repos PE différent à chaque adresse d'acteur du réseau domotique 1.

Une des particularités du dispositif selon la présente invention est de permettre d'établir des priorités entre les différents acteurs du réseau domotique 1. Ces priorités peuvent avantageusement être établies en relation avec l'adresse de chaque acteur 4-18 dans le réseau 1. Cette adresse de chaque acteur 4-18 peut être affectée par un installateur au moment du paramétrage du dispositif lors de son installation. En alternative, elle peut être affectée de façon automatique par le dispositif, en fonction de la nature de l'acteur considéré.

Par exemple, dans le dispositif illustré sur la figure 1, on peut affecter les adresses suivantes : 1001 pour la sirène d'alarme 4 ; 1101 pour le capteur biométrique 5 ; 1201 pour la caméra de surveillance 6 ; 1301 pour le capteur de mouvements 7 ; 1401 pour le capteur de fenêtre 8 ; 1D01 pour le clapet d'admission d'air chaud 9 ; 2101 pour le ventilateur 10 ; 2201 pour l'électrovanne 11 ; 5003 pour l'actionneur 12 de porte de garage ; 4000 pour la commande d'alimentation 13 de résistance chauffante 14 ; 70F0 pour la prise télécommandée 15 ; 70D0 et 70F1 respectivement pour les points lumineux 16 et 17 ; 9000 pour le dispositif de commande 18.

Un programme d'installation, comprenant la table d'affectation, indique à chaque acteur 4-18 le temps de repos PE qui lui est affecté, lequel temps de repos PE est mémorisé dans l'interface électronique 4a-18a de l'acteur 4-18. Ce temps de repos PE détermine l'ordre de priorité d'envoi des messages M sur le réseau 1, grâce à une séquence d'attente initiale contenue dans le programme de communication de chacun des acteurs 4-18. Selon cette séquence d'attente initiale, l'acteur 4-18 doit, avant d'émettre un message M, scruter la présence éventuelle de messages M sur le réseau 1, et il doit, après avoir constaté l'absence de messages M sur le réseau 1, émettre un signal binaire de début de message BDP puis attendre une durée égale au temps de repos PE qui lui a été affecté, et il ne peut poursuivre l'émission de son message M sur le réseau 1 que si aucun autre message M n'est apparu pendant ledit temps de repos PE.

En pratique, la table d'affectation du temps de repos PE affecté à chaque adresse d'acteur 4-18 peut avantageusement prévoir un temps de repos PE en fonction du nombre constituant l'adresse dudit acteur 4-18, le temps de repos PE étant de préférence une fonction croissante de ce nombre constituant l'adresse de l'acteur 4-18.

On comprend alors qu'un acteur 4-18 auquel on a affecté l'adresse la plus petite dispose d'un temps de repos PE le plus faible, et dispose donc d'une plus grande priorité pour émettre les messages M sur le réseau 1. Dans l'exemple ci-dessus, la sirène d'alarme 4 aura un temps de repos PE dont la durée est faible, tandis que l'actionneur 12 de porte de garage aura un temps de repos PE dont la durée est plusieurs fois supérieure.

Dans le colis CO illustré sur la figure 2, la trame du message M se poursuit par plusieurs segments qui peuvent dépendre du type de colis choisi et également du nombre de colis contenus dans le message M.

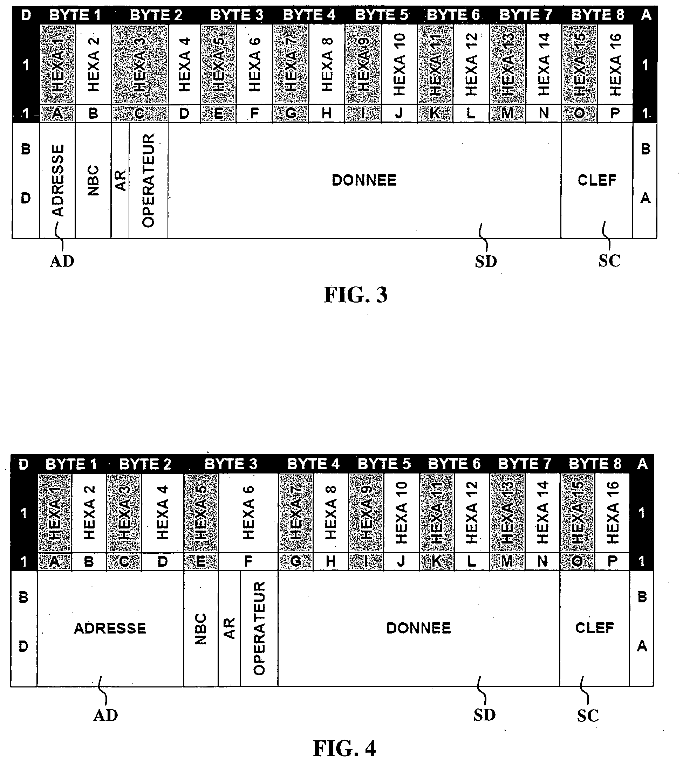

Sur les figures 3 et 4, on a illustré à titre d'exemples deux types de colis, pouvant convenir chacun à des applications différentes.

Dans les deux cas, la suite de la trame du message M comprend :
- un segment d'adresse AD,
- un segment d'indication de longueur des données, illustré par l'indication NBC, formé de quatre signaux binaires permettant de contenir un nombre hexadécimal de zéro à 16,
- un segment de données SD, également constitué de groupes de quatre signaux binaires chacun, chaque groupe constituant ainsi un nombre hexadécimal, et les groupes étant organisés en un ou plusieurs colis, chaque colis CO comportant un signal binaire de début de colis BD, un signal binaire de fin de colis BA, et 64 signaux binaires de données constituant ainsi 16 nombres hexadécimaux ; le nombre de colis constituant le segment de données est égal au nombre hexadécimal contenu dans le segment d'indication de longueur des données NBC,
- un segment de contrôle SC, contenant une clé calculée en fonction des signaux constituant le message ; la clé est calculée par l'acteur qui émet le message, et un calcul similaire est effectué par l'acteur qui reçoit le message, pour en vérifier l'intégrité.

Dans le premier exemple illustré sur la figure 3, le segment d'adresse AD contient un seul nombre hexadécimal. Cet exemple peut convenir à un réseau contenant un faible nombre d'acteurs, en l'occurrence un maximum de 16 acteurs.

Dans l'exemple illustré sur la figure 4, le segment d'adresse AD est formé de cinq groupes de quatre signaux binaires chacun, chaque groupe constituant ainsi un nombre hexadécimal. Cet exemple est bien adapté à un réseau contenant un plus grand nombre d'acteurs, tel qu'un réseau domotique, dès lors que les quatre nombres hexadécimaux permettent de définir des adresses pour 65 536 acteurs.

En pratique, pour la constitution d'un message M ayant un seul colis de données, le message M peut être constitué par assemblage de la trame de message M illustrée sur la figure 2 dans laquelle est incorporée la trame du colis illustrée sur la figure 4.

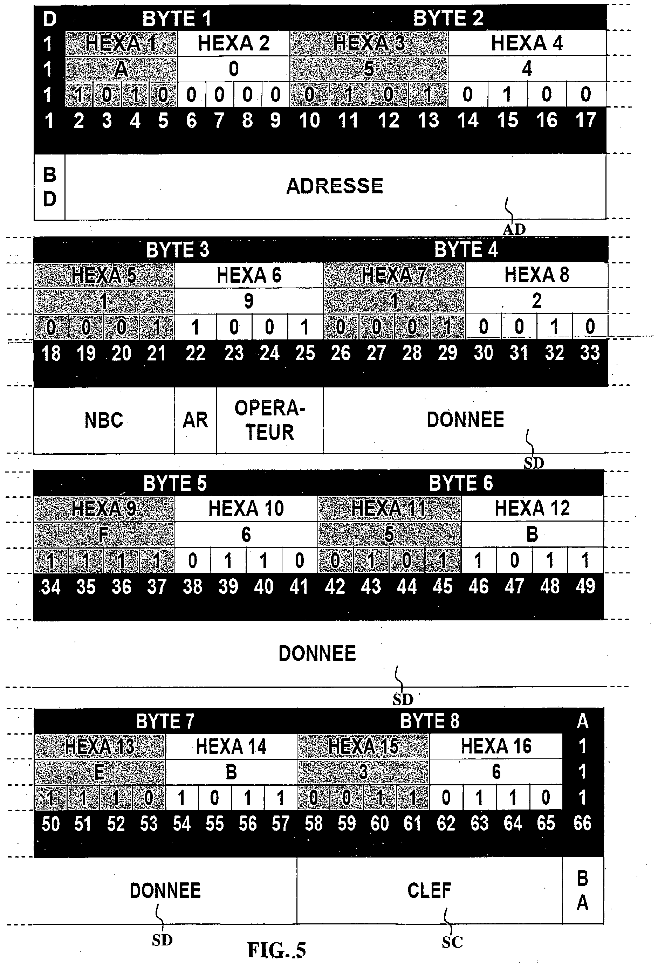

La figure 5 illustre de façon plus détaillée les signaux binaires contenus dans la trame d'un colis selon la figure 4. On distingue ainsi le signal binaire BD de début de colis, les 64 signaux binaires intermédiaires du colis, et le signal binaire de fin de colis BA.

On notera que, dans les exemples illustrés sur les figures 3 à 5, la trame de colis ou de message contient en outre un segment intermédiaire désigné par les indications AR et OPERATEUR : l'indication AR désigne un nombre binaire par lequel l'acteur émetteur d'un message peut indiquer s'il souhaite ou non obtenir un accusé de réception de son destinataire. Par exemple, le nombre prendra la valeur 1 si l'émetteur souhaite un accusé de réception, et prendra la valeur 0 dans le cas contraire. L'indication OPERATEUR, comportant trois nombres binaires, peut servir pour gérer des adresses de groupes d'acteurs, et de façon générale pour dire au destinataire ce qu'il doit faire des données reçues.

Certains fonctionnements nécessitent que l'acteur ayant envoyé un message puisse s'assurer que le message a bien été reçu. On prévoit alors que le programme de communication de chacun des acteurs comprend une séquence d'attente de réception selon laquelle, après la fin d'envoi d'un message sur le réseau, l'acteur scrute les messages sur le réseau et attend la réception d'un message d'accusé de réception qui lui est retourné par le destinataire. De son côté, le destinataire qui reçoit un message qui lui est destiné procède au contrôle d'intégrité du message qu'il reçoit, avant d'envoyer un message d'accusé de réception. Le contrôle d'intégrité s'effectue en comparant les données du message et la clé contenue dans le segment de contrôle du message.

Au cours du fonctionnement, lorsqu'il n'a pas de message à émettre, chacun des acteurs exécute une séquence d'attente courante au cours de laquelle il scrute la présence de messages sur le réseau. Si un message est présent sur le réseau, l'acteur compare le contenu du segment d'adresse du message avec sa propre adresse, pour déterminer s'il est destinataire de ce message. En cas de différence entre le contenu du segment d'adresse du message et sa propre adresse, c'est-à-dire s'il n'est pas destinataire, l'acteur se remet en séquence d'attente courante.

Par contre, en cas d'identité entre le contenu du segment d'adresse du message et sa propre adresse, l'acteur détermine qu'il est destinataire et il entreprend une séquence de contrôle, par comparaison entre les données du message et la clé contenue dans le segment de contrôle du message. Si la comparaison entre les données du message et la clé n'est pas satisfaisante, l'acteur envoie sur le réseau à l'acteur émetteur un message d'erreur, et se remet en séquence d'attente courante. Si la comparaison est satisfaisante, l'acteur envoie sur le réseau à l'acteur émetteur un message de bonne réception, puis exploite les données du message, par exemple en suivant des instructions contenues dans les données pour solliciter l'équipement respectif auquel il est associé, le cas échéant pour allumer un point lumineux, pour actionner une porte de garage, pour actionner une électrovanne.

Lorsqu'il souhaite émettre un message, l'acteur doit suivre une séquence d'attente initiale selon laquelle, avant d'émettre le message, il scrute la présence éventuelle de messages sur le réseau et, après avoir constaté l'absence de messages sur le réseau, il émet un signal binaire de début de message BDP puis se met en attente pendant un temps de repos PE dont la durée lui a été affectée de manière unique, ne poursuivant ensuite l'émission de son message sur le réseau que si aucun autre message n'est apparu pendant le temps de repos. De la sorte, si entre-temps un acteur prioritaire a émis un signal binaire de début de message, ce qui lui est autorisé par son plus faible temps de repos, l'acteur en attente s'abstient de poursuivre l'émission de son message sur le réseau.

S'il a pu envoyer le message, l'acteur émetteur scrute les messages sur le réseau 1 et attend la réception d'un message d'accusé de réception s'il a demandé un tel accusé de réception, ou attend la réception d'un message d'erreur. S'il reçoit un message de bonne réception, l'acteur émetteur s'abstient de toute autre émission sur le réseau 1 pendant sa séquence d'attente. Si au contraire il reçoit un message d'erreur qui lui est adressé par le destinataire, l'acteur émetteur s'abstient d'émettre sur le réseau pendant sa séquence d'attente, puis reprend si possible la transmission de son message sur le réseau 1.

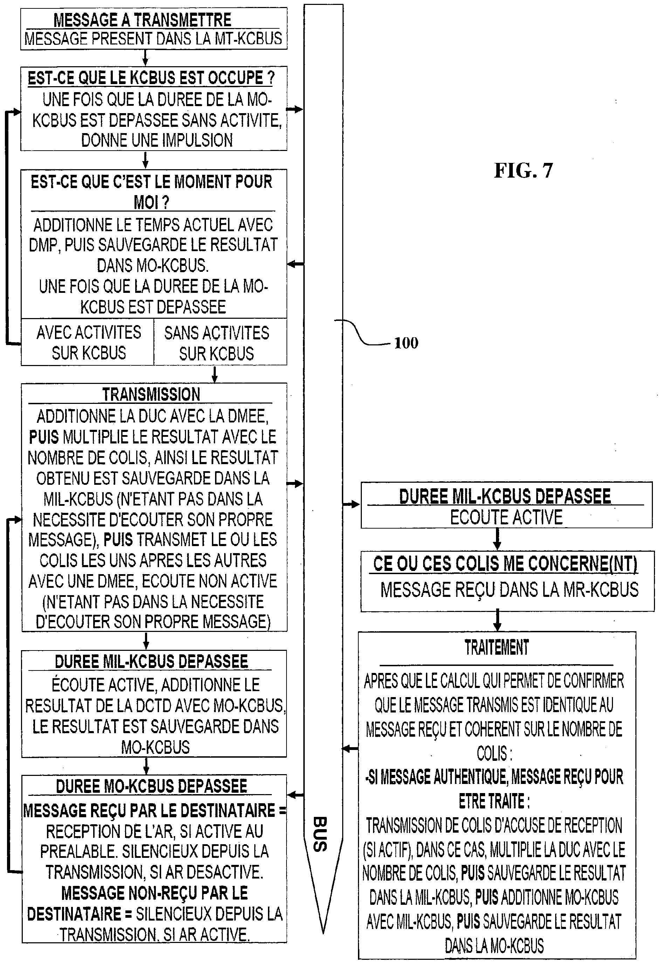

La figure 7 est une autre expression, sous forme d'organigramme, du procédé de communication selon un mode de réalisation de la présente invention. Le message à transmettre par un acteur sur le réseau est initialement placé dans une mémoire tampon MT de l'interface électronique de l'acteur. L'indication DUC désigne la durée d'un colis, c'est-à-dire 66 fois la durée d'un signal binaire élémentaire. L'indication DMEE est une durée choisie au moins égale au temps de calcul nécessaire à l'acteur destinataire pour authentifier le message reçu par le calcul de la clé, augmentée du temps de transfert des informations sur le réseau domotique. L'indication DCTD désigne la durée de calcul du traitement par le destinataire. L'indication DMP est la durée du temps de repos PE.

Pour obtenir une bonne fiabilité de transmission des messages M sur le réseau 1, la trame de message comprend un segment de contrôle SC, chaque acteur émetteur calcule une clé en fonction des signaux constituant le message M et insère cette clé dans le segment de contrôle SC du message M, et chaque acteur destinataire effectue un calcul similaire pour comparer les signaux constituant le message M avec la clé contenue dans le segment de contrôle SC dudit message M.

En pratique, une bonne fiabilité peut être obtenue en utilisant une clé de contrôle calculée par la fonction OU EXCLUSIF, encore appelée XOR ou disjonction exclusive. Cette fonction est un opérateur logique appliqué à deux opérandes qui peuvent avoir chacun la valeur VRAI ou FAUX. Selon la fonction XOR, le résultat prend la valeur VRAI lorsque l'un seulement des opérandes est VRAI. Appliqué à deux opérandes A et B binaires, prenant les valeurs 0 ou 1, le résultat de A XOR B est égal à 0 lorsque A et B sont égaux à 0, le résultat est égal à 1 lorsque A ou B est égal à 1, et le résultat est égal à 0 lorsque A et B sont tous deux égaux à 1.

Selon un mode de réalisation de l'invention, le segment de contrôle SC contient deux nombres hexadécimaux. On calcule le premier nombre hexadécimal contenu dans le segment de contrôle SC en appliquant la fonction XOR à la succession des nombres hexadécimaux de rang impair contenus dans le message M : on applique la fonction XOR au premier et au troisième nombre, puis on applique la fonction XOR au résultat et au cinquième nombre, puis au résultat et au septième nombre, et ainsi de suite. On calcule le second nombre hexadécimal contenu dans le segment de contrôle SC en appliquant de la même manière la fonction XOR à la succession des nombres hexadécimaux de rang pair contenus dans le message M.

Lors de la séquence de contrôle effectuée par un acteur destinataire du message M, l'acteur destinataire effectue sur le message M les mêmes calculs que l'acteur émetteur, en appliquant la fonction XOR aux nombres hexadécimaux de rang impair puis aux nombres hexadécimaux de rang pair, et il compare le résultat avec le contenu du segment de contrôle SC du message M. En cas d'identité, la réception est considérée correcte. En cas de différence, le message M reçu est considéré erroné.

Dans le cas d'un réseau domotique à bus filaire notamment, les transmissions des messages sont quelque peu dégradées lorsque le réseau est relativement long, les fronts de montée et de descente des signaux binaires devenant déformés. Ces déformations peuvent avoir comme conséquence une interprétation erronée des signaux électriques reçus, pouvant donner lieu à des erreurs dans le nombre ou dans la valeur des signaux binaires.

Pour éviter ces inconvénients qui conduisent à une perte de fiabilité, on peut avantageusement introduire selon l'invention, dans les interfaces électroniques 4a-18a des acteurs 4-18 du réseau 1, une table d'interprétation des signaux, définie de manière expérimentale par la comparaison préalable entre les durées de signaux continus émis et les durées de signaux continus reçus telles qu'interprétées par les microcontrôleurs des interfaces électroniques. Par exemple, on a pu constater qu'un signal binaire élémentaire émis de 30 µs est interprété, par différents microcontrôleurs récepteurs, comme un signal pouvant durer de 44 à 56 µs. De même, on a pu constater qu'un signal binaire double émis de 60 µs est interprété, par différents microcontrôleurs récepteurs, comme un signal pouvant durer de 92 à 100 µs. On définit alors, dans la table d'interprétation des signaux, qu'un signal reçu de moins de (92 + 56) / 2 = 74 µs est un signal binaire élémentaire de 30 µs, tandis qu'un signal reçu ayant une durée supérieure à 74 µs pourra être un signal double de 60 µs. On procède de manière similaire pour des signaux de plus grande durée, en définissant les intervalles et les frontières entre les nombres entiers de signaux binaires élémentaires.

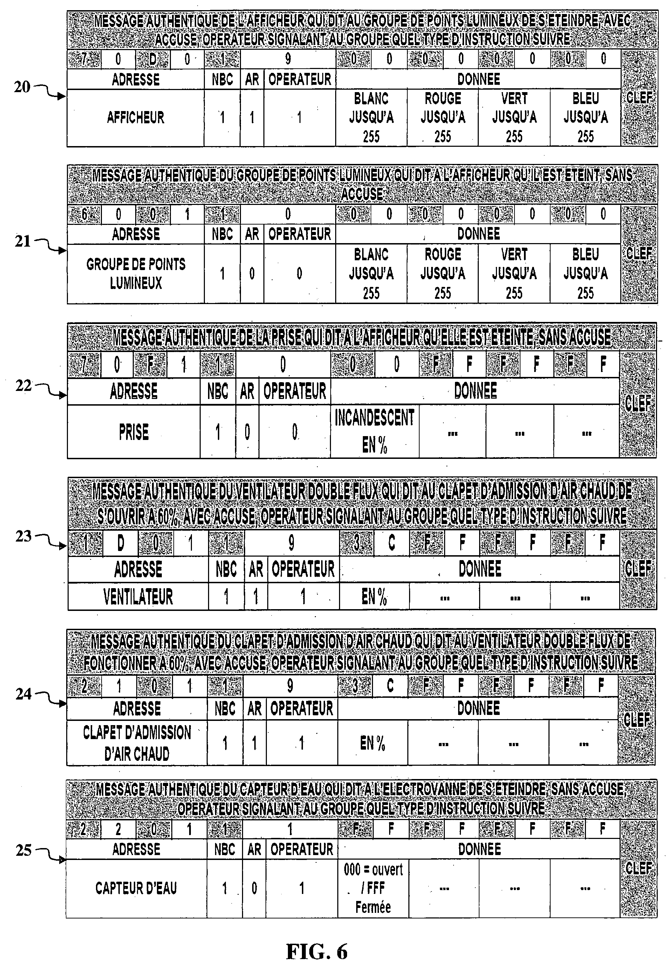

La figure 6 illustre des exemples de messages destinés spécifiquement à certains acteurs du réseau domotique 1.

Ainsi, le message 20 est un message de commande qui ordonne à un groupe de points lumineux de s'éteindre, et qui demande un accusé de réception. Le champ « opérateur » indique au groupe de points lumineux quel type d'instruction il doit suivre.

Le message 21 est un message d'information adressé par un acteur d'éclairage LED, sans demande d'accusé de réception, indiquant que l'éclairage est éteint.

Le message 22 est un message d'information adressé par un acteur prise de courant commandée, sans demande d'accusé de réception, indiquant que la prise est éteinte.

Le message 23 est un message de commande provenant d'un ventilateur double flux qui commande au clapet d'admission d'air chaud de s'ouvrir à 60 %, en demandant un accusé de réception.

Le message 24 est un message de commande provenant du clapet d'admission d'air chaud, qui commande au ventilateur double flux de progresser vers 60 %, en demandant un accusé de réception, le champ « opérateur » signalant au groupe quel type d'instruction il doit suivre.

Le message 25 est un message de commande provenant d'un capteur d'eau qui commande à une électrovanne de se fermer, sans demander d'accusé de réception.

Bien que décrite dans le cadre d'un réseau domotique d'un bâtiment (d'habitation ou d'industrie), la présente invention est également applicable à tout réseau, y compris dans le cadre des systèmes embarqués de tout moyen de transport tel qu'une voiture, un navire ou un aéronef par exemple.

La présente invention n'est pas limitée aux modes de réalisation qui ont été explicitement décrits, mais elle en inclut les diverses variantes et généralisations contenues dans le domaine des revendications ci-après.

## Revendications

1. Procédé de communication dans un réseau domotique (1), permettant la communication entre acteurs (4-18) du réseau ayant chacun une interface électronique (4a-18a) à programme de communication et associés à des équipements dans un bâtiment (2), au moyen de messages (M) transmis sur le réseau (1) sous forme de trame comprenant une pluralité de segments fonctionnels,
**caractérisé**
**en ce que** ladite trame de message comprend :
- un segment de début de message (BDP, PE),
- un segment d'adresse (AD),
- un segment d'indication de longueur des données (NBC),
- un segment de données (SD),
- un segment de contrôle (SC), contenant une clé calculée en fonction des signaux constituant le message (M),
- un signal binaire de fin de message (BA),
**en ce que** le segment de début de message (BDP, PE) comporte un signal binaire de début de message (BDP) suivi d'un temps de repos (PE), et en ce que :
- avant d'émettre un message (M), un acteur (4-18) scrute la présence éventuelle de messages sur le réseau (1) puis, après avoir constaté l'absence de messages sur le réseau (1), émet un signal binaire de début de message (BDP) puis attend un temps de repos (PE) dont la durée lui a été affectée de manière unique, et ne poursuit l'émission de son message (M) sur le réseau (1) que si aucun autre message n'est apparu sur le réseau (1) pendant ledit temps de repos (PE).

2. Procédé selon la revendication 1, **caractérisé en ce que**, pour chaque message :
- le segment de données (SD) du message (M) est organisé en un nombre entier de colis composés chacun d'un signal binaire de début de colis (BD), d'un signal binaire de fin de colis (BA), et de 64 signaux binaires de données,
- le segment d'indication de longueur des données (NBC) du message est constitué par ledit nombre entier de colis composant ledit segment de données (SD) du message.

3. Procédé selon la revendication 2, **caractérisé en ce que** ledit nombre entier de colis est inférieur ou égal à 16.

4. Procédé selon l'une quelconque des revendications 1 à 3, **caractérisé en ce que** la durée du temps de repos (PE) affectée à chaque acteur (4-18) est une fonction croissante du nombre constituant l'adresse dudit acteur (4-18).

5. Procédé selon l'une quelconque des revendications 1 à 4, **caractérisé en ce que**, lors de la transmission d'un message (M) sur le réseau (1) entre un acteur émetteur et un acteur destinataire :
- après la fin d'envoi du message (M) sur le réseau (1), l'acteur émetteur scrute les messages sur le réseau (1) et attend le cas échéant la réception d'un message d'accusé de réception,
- à la réception du message (M) qui lui est destiné sur le réseau (1), l'acteur destinataire effectue une séquence de contrôle par comparaison entre les données du message et la clé contenue dans le segment de contrôle (SC) du message (M),
- si la comparaison entre les données du message et la clé est satisfaisante, l'acteur destinataire envoie le cas échéant sur le réseau (1) à l'acteur émetteur un message de bonne réception,
- si la comparaison entre les données du message et la clé n'est pas satisfaisante, l'acteur destinataire envoie sur le réseau (1) à l'acteur émetteur un message d'erreur,
- à réception d'un message de bonne réception, l'acteur émetteur s'abstient de toute autre émission sur le réseau (1) pendant sa séquence d'attente,
- à réception d'un message d'erreur, l'acteur émetteur s'abstient d'émettre sur le réseau (1) pendant sa séquence d'attente, puis reprend si possible la transmission de son message (M) sur le réseau (1).

6. Procédé selon l'une quelconque des revendications 1 à 5, **caractérisé en ce que**, lorsqu'il n'a pas de message à émettre, chacun des acteurs (4-18) exécute une séquence d'attente courante au cours de laquelle :
- l'acteur (4-18) scrute la présence de messages (M) sur le réseau (1),
- en présence d'un message (M), l'acteur (4-18) compare le contenu du segment d'adresse (AD) dudit message avec sa propre adresse,
- en cas de différence entre le contenu du segment d'adresse (AD) dudit message et sa propre adresse, l'acteur (4-18) se remet en séquence d'attente courante,
- en cas d'identité entre le contenu du segment d'adresse (AD) dudit message et sa propre adresse, l'acteur (4-18) entreprend une séquence de contrôle, par comparaison entre les données du message et la clé contenue dans le segment de contrôle (SC) du message,
- si la comparaison entre les données du message et la clé n'est pas satisfaisante, l'acteur destinataire envoie sur le réseau (1) à l'acteur émetteur un message d'erreur, et se remet en séquence d'attente courante,
- si la comparaison entre les données du message et la clé est satisfaisante, l'acteur destinataire envoie sur le réseau (1) à l'acteur émetteur un message de bonne réception, puis exploite les données du message (M).

7. Dispositif de communication dans un réseau domotique (1), permettant la communication entre des acteurs (4-18) du réseau ayant chacun une interface électronique (4a-18a) à programme de communication et associés à des équipements dans un bâtiment (2), au moyen de messages (M) transmis sur le réseau (1) sous forme de trame comprenant une pluralité de segments fonctionnels,
**caractérisé**
**en ce que** ladite trame de message comprend :
- un segment de début de message (BDP, PE),
- un segment d'adresse (AD),
- un segment d'indication de longueur des données (NBC),
- un segment de données (SD),
- un segment de contrôle (SC), contenant une clé calculée en fonction des signaux constituant le message (M),
- un signal binaire de fin de message (BA), en ce que le segment de début de message (BDP, PE) comporte un signal binaire de début de message (BDP) suivi d'un temps de repos (PE),
et **en ce que** :
- le programme de communication de chacun des acteurs (4-18) comprend une séquence d'attente initiale pour qu'un acteur, avant d'émettre un message (M), scrute la présence éventuelle de messages sur le réseau (1) et, après avoir constaté l'absence de messages sur le réseau (1), émette un signal binaire de début de message puis attende un temps de repos (PE) dont la durée lui a été affectée de manière unique, et ne poursuive l'émission de son message (M) sur le réseau (1) que si aucun autre message n'est apparu sur le réseau (1) pendant ledit temps de repos (PE).

8. Dispositif selon la revendication 7, **caractérisé en ce que** :
- le segment de données (SD) du message (M) est organisé en un nombre entier de colis composés chacun d'un signal binaire de début de colis (BD), d'un signal binaire de fin de colis (BA), et de 64 signaux binaires de données,
- le segment d'indication de longueur des données (NBC) du message est constitué par ledit nombre entier de colis composant ledit segment de données du message (M).

9. Dispositif selon la revendication 8, **caractérisé en ce que** ledit nombre entier de colis est inférieur ou égal à 16.

10. Dispositif selon l'une quelconque des revendications 7 à 9, **caractérisé en ce que** le programme de communication de chacun des acteurs (4-18) comprend une séquence de calcul du temps de repos (PE), selon laquelle le temps de repos (PE) est calculé en fonction du nombre constituant l'adresse dudit acteur (4-18).

11. Dispositif selon l'une quelconque des revendications 7 à 10, **caractérisé en ce que** le programme de communication de chacun des acteurs (4-18) comprend une séquence d'attente de réception selon laquelle, après la fin d'envoi d'un message (M) sur le réseau, l'acteur (4-18) scrute les messages sur le réseau et attend la réception d'un message d'accusé de réception.

12. Dispositif selon l'une quelconque des revendications 7 à 11, **caractérisé en ce que** le programme de communication de chacun des acteurs (4-18) comprend une séquence d'attente courante au cours de laquelle :
- l'acteur scrute la présence de messages sur le réseau (1),
- en présence d'un message (M), l'acteur (4-18) compare le contenu du segment d'adresse (AD) dudit message (M) avec sa propre adresse,
- en cas de différence entre le contenu du segment d'adresse (AD) dudit message (M) et sa propre adresse, l'acteur (4-18) se remet en séquence d'attente courante,
- en cas d'identité entre le contenu du segment d'adresse (AD) dudit message (M) et sa propre adresse, l'acteur (4-18) exploite le message (M).

13. Dispositif selon la revendication 12, **caractérisé en ce que** le programme de communication de chacun des acteurs (4-18) comprend une séquence de contrôle, qui effectue une comparaison entre les données du message et la clé contenue dans le segment de contrôle (SC) du message, et à l'issue de laquelle :
- si la comparaison entre les données du message et la clé n'est pas satisfaisante, l'acteur destinataire envoie sur le réseau (1) à l'acteur émetteur un message d'erreur, et se remet en séquence d'attente courante,
- si la comparaison entre les données du message et la clé est satisfaisante, l'acteur destinataire envoie sur le réseau (1) à l'acteur émetteur un message de bonne réception, puis exploite les données du message (M).

14. Installation domotique comprenant des équipements de bâtiment associés à des acteurs (4-18) d'un réseau domotique (1) munis d'une interface électronique (4a-18a) à programme de communication, **caractérisée en ce qu'**elle comprend un dispositif de communication (3) selon l'une quelconque des revendications 7 à 13.

## Patentansprüche

1. Kommunikationsverfahren in einem Heimnetzwerk (1), das die Kommunikation zwischen Aktoren (4-18) des Netzwerks ermöglicht, die jeweils eine elektronische Schnittstelle (4a-18a) mit einem Kommunikationsprogramm aufweisen und mit Einrichtungen in einem Gebäude (2) verbunden sind, mittels Nachrichten (M), welche in der Form eines Frames mit einer Mehrzahl an funktionellen Segmenten durch das Netzwerk (1) übertragen werden,
**dadurch gekennzeichnet, dass**
der Nachrichtenframe umfasst:
- ein Nachrichtenanfangs-Segment (BDP, PE)
- ein Adress-Segment (AD)
- ein Segment zur Anzeige der Datenlänge (NBC)
- ein Datensegment (SD)
- ein Kontrollsegment (SC), welches einen Schlüssel umfasst, der als Funktion der die Nachricht (M) bildenden Signale berechnet ist,
- ein binäres Nachrichtenend-Signal (BA),
wobei das Nachrichtenanfangs-Segment (BDP, PE) ein binäres Nachrichtenanfangs-Signal (BDP) gefolgt von einer Leerlaufzeit (PE) umfasst, und wobei:
- vor dem Senden einer Nachricht (M) ein Aktor (4-18) auf das mögliche Vorliegen von Nachrichten in dem Netzwerk (1) prüft, anschließend, nachdem das Nicht-Vorliegen von Nachrichten in dem Netzwerk (1) festgestellt wurde, ein binäres Nachrichtenanfangs-Signal (BDP) sendet, anschließend eine Leerlaufzeit (PE), deren Dauer ihr in eindeutiger Weise zugewiesen wurde abwartet, und mit dem Senden seiner Nachricht (M) über das Netzwerk (1) nur fortfährt, wenn keine anderen Nachrichten in dem Netzwerk (1) während der Leerlaufzeit (PE) erschienen sind.

2. Verfahren nach Anspruch 1, **dadurch gekennzeichnet, dass** für jede Nachricht:
- das Datensegment (SD) der Nachricht (M) in einer ganzen Zahl an Paketen organisiert ist, von denen jedes aus einem binären Paketanfangs-Signal (BD), einem binären Paketend-Signal (BA) und 64 binären Datensignalen zusammengesetzt ist,
- das Segment zur Anzeige der Datenlänge (NBC) der Nachricht aus der ganzen Zahl an Paketen, die das Datensegment (SD) der Nachricht bilden, aufgebaut ist.

3. Verfahren nach Anspruch 2, **dadurch gekennzeichnet, dass** die ganze Zahl an Paketen kleiner oder gleich 16 ist.

4. Verfahren nach einem der Ansprüche 1 bis 3, **dadurch gekennzeichnet, dass** die Dauer der jedem Aktor (4-18) zugewiesenen Leerlaufzeit (PE) eine steigende Funktion der Nummer ist, die die Adresse des Aktors (4-18) bildet.

5. Verfahren nach einem der Ansprüche 1 bis 4, **dadurch gekennzeichnet, dass** während der Übertragung einer Nachricht (M) über das Netzwerk (1) zwischen einem Sender-Aktor und einem Empfangs-Aktor:
- nach Abschluss des Sendens der Nachricht (M) über das Netzwerk (1) der Sender-Aktor die Nachrichten im Netzwerk (1) prüft und gegebenenfalls auf den Erhalt einer Empfangsbestätigung des Erhalts wartet,
- beim Empfang der Nachricht (M), die ihm über das Netzwerk (1) zugeordnet wurde, der Empfangs-Aktor eine Kontrollsequenz durch Vergleich zwischen den Daten der Nachricht und dem in dem Kontrollsegment (SC) der Nachricht (M) enthaltenen Schlüssel durchführt,
- sofern der Vergleich zwischen den Daten der Nachricht und dem Schlüssel zufriedenstellend ausfällt, der Empfangs-Aktor gegebenenfalls über das Netzwerk (1) an den Sender-Aktor eine positive Empfangsbestätigung sendet,
- sofern der Vergleich zwischen den Daten und dem Schlüssel nicht zufriedenstellend ausfällt, der Empfangs-Aktor über das Netzwerk (1) an den Sender-Aktor eine Fehlermeldung sendet,
- beim Erhalt einer positiven Empfangsbestätigung der Sender-Aktor während seiner Wartesequenz jeden weiteren Sendevorgang über das Netzwerk (1) unterlässt,
- beim Erhalt einer Fehlermeldung der Sender-Aktor während seiner Wartesequenz das Senden über das Netzwerk (1) unterlässt, und dann, falls möglich, die Übertragung seiner Nachricht (M) über das Netzwerk (1) fortsetzt.

6. Verfahren nach einem der Ansprüche 1 bis 5, **dadurch gekennzeichnet, dass**, sofern keine Nachricht zum Senden vorhanden ist, jeder der Aktoren (4-18) eine gegenwärtige Wartesequenz durchführt, während dieser:
- der Aktor (4-18) das Vorliegen von Nachrichten (M) in dem Netzwerk (1) prüft,
- beim Vorliegen einer Nachricht (M), der Aktor (4-18) den Inhalt des Adress-Segments (AD) der Nachricht mit seiner eigenen Adresse vergleicht,
- im Fall von Unterschieden zwischen dem Inhalt des Adress-Segments (AD) der Nachricht und seiner eigenen Adresse sich der Aktor (4-18) wieder in seine gegenwärtige Wartesequenz begibt,
- im Fall einer Übereinstimmung zwischen dem Inhalt des Adress-Segments (AD) der Nachricht und seiner eigenen Adresse, der Aktor (4-18) eine Kontrollsequenz durchführt, indem die Daten der Nachricht und der im Kontroll-Segment (SC) enthaltene Schlüssel der Nachricht verglichen werden,
- sofern der Vergleich zwischen den Daten der Nachricht und dem Schlüssel nicht zufriedenstellend ausfällt, der Empfangs-Aktor über das Netzwerk (1) an den Sender-Aktor eine Fehlermeldung sendet, und sich wieder in seine gegenwärtige Wartesequenz begibt,
- sofern der Vergleich zwischen den Daten der Nachricht und dem Schlüssel zufriedenstellend ausfällt, der Empfangs-Aktor über das Netzwerk (1) an den Sender-Aktor eine Empfangsbestätigung-Nachricht sendet, und dann die Daten der Nachricht (M) verwendet.

7. Kommunikationsvorrichtung in einem Heimnetzwerk (1), welches die Kommunikation zwischen Aktoren (4-18) des Netzwerks erlaubt, die jeweils eine elektronische Schnittstelle (4a-18a) mit einem Kommunikationsprogramm aufweisen und mit Einrichtungen in einem Gebäude (2) verbunden sind, mittels Nachrichten (M), welche in der Form eines Frames mit einer Mehrzahl an funktionellen Segmenten durch das Netzwerk (1) übertragen werden,
**dadurch gekennzeichnet, dass**
der Nachrichtenframe umfasst:
- ein Nachrichtenanfangs-Segment (BDP, PE)
- ein Adress-Segment (AD)
- ein Segment zur Anzeige der Datenlänge (NBC)
- ein Datensegment (SD)
- ein Kontrollsegment (SC), welches einen Schlüssel umfasst, der als Funktion der die Nachricht (M) bildenden Signale berechnet ist,
- ein binäres Nachrichtenend-Signal (BA),
wobei das Nachrichtenanfangs-Segment (BDP, PE) ein binäres Nachrichtenanfangs-Signal (BDP) gefolgt von einer Leerlaufzeit (PE) umfasst,
und wobei
- das Kommunikationsprogramm eines jeden Aktors (4-18) eine initiale Wartesequenz für einen Aktor umfasst, vor dem Senden einer Nachricht (M) das etwaige Vorliegen von Nachrichten in dem Netzwerk (1) zu prüfen, und nachdem das Nicht-Vorliegen von Nachrichten in dem Netzwerk (1) festgestellt wurde, ein binäres Nachrichtenanfangs-Signal zu senden, anschließend eine Leerlaufzeit (PE), deren Dauer ihr in eindeutiger Weise zugewiesen wurde abzuwarten, und mit dem Senden seiner Nachricht (M) über das Netzwerk (1) nur fortzufahren, wenn keine anderen Nachrichten in dem Netzwerk (1) während der Leerlaufzeit (PE) erschienen sind.

8. Vorrichtung nach Anspruch 7, **dadurch gekennzeichnet, dass**:
- das Datensegment (SD) der Nachricht (M) in einer ganzen Zahl an Paketen organisiert ist, von denen jedes aus einem binären Paketanfangs-Signal (BD), einem binären Paketend-Signal (BA) und 64 binären Datensignalen zusammengesetzt ist,
- das Segment zur Anzeige der Datenlänge (NBC) der Nachricht aus der ganzen Zahl an Paketen, die das Datensegment der Nachricht (M) bilden, aufgebaut ist.

9. Vorrichtung nach Anspruch 8, **dadurch gekennzeichnet, dass** die ganze Zahl an Paketen kleiner oder gleich 16 ist.

10. Vorrichtung nach einem der Ansprüche 7 bis 9, **dadurch gekennzeichnet, dass** das Kommunikationsprogramm eines jeden Aktors (4-18) eine Sequenz zur Berechnung der Leerlaufzeit (PE) enthält, nach welcher die Leerlaufzeit (PE) anhand einer Funktion der Nummer, die die Adresse des Aktors (4-18) bildet, berechnet wird.

11. Vorrichtung nach einem der Ansprüche 7 bis 10, **dadurch gekennzeichnet, dass** das Kommunikationsprogramm eines jeden Aktors (4-18) eine Empfangs-Wartesequenz umfasst, anhand welcher, nach Abschluss des Sendens der Nachricht (M) über das Netzwerk, der Aktor (4-18) die Nachrichten im Netzwerk prüft und den Erhalt einer Nachrichten-Empfangsbestätigung abwartet.

12. Vorrichtung nach einem der Ansprüche 7 bis 11, **dadurch gekennzeichnet, dass** das Kommunikationsprogramm eines jeden Aktors (4-18) eine gegenwärtige Wartesequenz umfasst, anhand der:
- der Aktor das Vorliegen von Nachrichten im Netzwerk (1) prüft,
- beim Vorliegen einer Nachricht (M), der Aktor (4-18) den Inhalt des Adress-Segments (AD) der Nachricht (M) mit seiner eigenen Adresse vergleicht,
- im Fall von Unterschieden zwischen dem Inhalt des Adress-Segments (AD) der Nachricht (M) und seiner eigenen Adresse sich der Aktor (4-18) wieder in seine gegenwärtige Wartesequenz begibt,
- im Fall einer Übereinstimmung zwischen dem Inhalt des Adress-Segments (AD) der Nachricht (M) und seiner eigenen Adresse, der Aktor (4-18) die Nachricht (M) verwendet.

13. Vorrichtung nach Anspruch 12, **dadurch gekennzeichnet, dass** das Kommunikationsprogramm eines jeden Aktors (4-18) eine Kontrollsequenz umfasst, die einen Vergleich zwischen den Daten der Nachricht und dem in dem Kontrollsegment (SC) der Nachricht enthaltenen Schlüssel durchführt, und an deren Ende:
- sofern der Vergleich zwischen den Daten und dem Schlüssel nicht zufriedenstellend ausfällt, der Empfangs-Aktor über das Netzwerk (1) an den Sender-Aktor eine Fehlermeldung sendet, und sich wieder in seine gegenwärtige Wartesequenz begibt,
- sofern der Vergleich zwischen den Daten der Nachricht und dem Schlüssel zufriedenstellend ausfällt, der Empfangs-Aktor über das Netzwerk (1) an den Sender-Aktor eine Empfangsbestätigung-Nachricht sendet, und dann die Daten der Nachricht (M) verwendet.

14. Heiminstallation, umfassend Einrichtungen eines Gebäudes, die mit Aktoren (4-18) eines Heimnetzwerks (1) verbunden sind, die eine elektronische Schnittstelle (4a-18a) mit einem Kommunikationsprogramm aufweisen,
**dadurch gekennzeichnet, dass**
die Heiminstallation eine Kommunikationsvorrichtung (3) nach einem der Ansprüche 7 bis 13 umfasst.

## Claims

1. Method for communication in a home automation network (1), allowing communication between actors (4-18) of the network each having an electronic interface (4a-18a) with communication program and associated with equipment items in a building (2), by means of messages (M) transmitted over the network (1) in the form of frames comprising a plurality of functional segments,
**characterized**
**in that** said message frame comprises:
- a start-of-message segment (BDP, PE),
- an address segment (AD),
- a data length indication segment (NBC),
- a data segment (SD),
- a control segment (SC), containing a key computed as a function of the signals that make up the message (M),
- an end-of-message binary signal (BA),
**in that** the start-of-message segment (BDP,PE) comprises a start-of-message binary signal (BDP) followed by an idle time (PE),
and **in that**:
- before sending a message (M), an actor (4-18) scans for the possible presence of messages on the network (1) then, after having confirmed the absence of messages on the network (1), sends a start-of-message binary signal (BDP) then wait for an idle time (PE) whose duration has been assigned uniquely to it, and continues sending its message (M) over the network (1) only if no other message has appeared on the network (1) during said idle time (PE).

2. Method according to Claim 1, **characterized in that**, for each message:
- the data segment (SD) of the message (M) is organized as an integer number of parcels each composed of a start-of-parcel binary signal (BD), an end-of-parcel binary signal (BA), and 64 data binary signals,
- the data length indication segment (NBC) of the message consists of said integer number of parcels that make up said data segment (SD) of the message.

3. Method according to Claim 2, **characterized in that** said integer number of parcels is less than or equal to 16.

4. Method according to any one of Claims 1 to 3, **characterized in that** the duration of the idle time (PE) assigned to each actor (4-18) is an ascending function of the number constituting the address of said actor (4-18).

5. Method according to any one of Claims 1 to 4, **characterized in that**, upon the transmission of a message (M) over the network (1) between a sending actor and a recipient actor:
- after the end of sending of the message (M) over the network (1), the sending actor scans the messages on the network (1) and awaits, if necessary, the reception of a reception acknowledgement message,
- on reception of the message (M) which is intended for it over the network (1), the recipient actor performs a control sequence by comparison between the data of the message and the key contained in the control segment (SC) of the message (M),
- if the comparison between the data of the message and the key is satisfactory, the recipient actor sends, if necessary, over the network (1) to the sending actor a reception OK message,
- if the comparison between the data of the message and the key is unsatisfactory, the recipient actor sends over the network (1) to the sending actor an error message,
- on reception of a reception OK message, the sending actor abstains from any other sending over the network (1) during its waiting sequence,
- on reception of an error message, the sending actor abstains from sending over the network (1) during its waiting sequence, then resumes, if possible, the transmission of its message (M) over the network (1).

6. Method according to any one of Claims 1 to 5, **characterized in that**, when it does not have a message to send, each of the actors (4-18) executes a current waiting sequence during which:
- the actor (4-18) scans for the presence of messages (M) on the network (1),
- in the presence of a message (M), the actor (4-18) compares the content of the address segment (AD) of said message with its own address,
- in case of difference between the content of the address segment (AD) of said message and its own address, the actor (4-18) returns to the current waiting sequence,
- in case of a match between the content of the address segment (AD) of said message and its own address, the actor (4-18) undertakes a control sequence, by comparison between the data of the message and the key contained in the control segment (SC) of the message,
- if the comparison between the data of the message and the key is unsatisfactory, the recipient actor sends over the network (1) to the sending actor an error message, and returns to the current waiting sequence,
- if the comparison between the data of the message and the key is satisfactory, the recipient actor sends over the network (1) to the sending actor a reception OK message, then uses the data of the message (M).

7. Communication device in a home automation network (1), allowing communication between actors (4-18) of the network each having an electronic interface (4a-18a) with communication program and associated with equipment items in a building (2), by means of messages (M) transmitted over the network (1) in the form of frames comprising a plurality of functional segments,
**characterized**
**in that** said message frame comprises:
- a start-of-message segment (BDP, PE),
- an address segment (AD),
- a data length indication segment (NBC),
- a data segment (SD),
- a control segment (SC), containing a key computed as a function of the signals that make up the message (M),
- an end-of-message binary signal (BA),
**in that** the start-of-message segment (BDP,PE) comprises a start-of-message binary signal (BDP) followed by an idle time (PE),
and **in that**:
- the communication program of each of the actors (4-18) comprises an initial waiting sequence for an actor, before sending a message (M), to scan for the possible presence of messages on the network (1) and, after having confirmed the absence of messages on the network (1), send a start-of-message binary signal then wait for an idle time (PE) whose duration has been assigned uniquely to it, and continue sending its message (M) over the network (1) only if no other message has appeared on the network (1) during said idle time (PE).

8. Device according to Claim 7, **characterized in that**:
- the data segment (SD) of the message (M) is organized as an integer number of parcels each composed of a start-of-parcel binary signal (BD), an end-of-parcel binary signal (BA), and 64 data binary signals,
- the data length indication segment (NBC) of the message consists of said integer number of parcels that make up said data segment of the message (M).

9. Device according to Claim 8, **characterized in that** said integer number of parcels is less than or equal to 16.

10. Device according to any one of Claims 7 to 9, **characterized in that** the communication program of each of the actors (4-18) comprises an idle time (PE) computation sequence, according to which the idle time (PE) is computed as a function of the number constituting the address of said actor (4-18).

11. Device according to any one of Claims 7 to 10, **characterized in that** the communication program of each of the actors (4-18) comprises a reception wait sequence according to which, after the end of sending of a message (M) over the network, the actor (4-18) scans the messages on the network and awaits the reception of a reception acknowledgement message.

12. Device according to any one of Claims 7 to 11, **characterized in that** the communication program of each of the actors (4-18) comprises a current waiting sequence during which:
- the actor scans for the presence of messages on the network (1),
- in the presence of a message (M), the actor (4-18) compares the content of the address segment (AD) of said message (M) with its own address,
- in case of difference between the content of the address segment (AD) of said message (M) and its own address, the actor (4-18) returns to the current waiting sequence,
- in case of a match between the content of the address segment (AD) of said message (M) and its own address, the actor (4-18) uses the message (M).

13. Device according to Claim 12, **characterized in that** the communication program of each of the actors (4-18) comprises a control sequence, which performs a comparison between the data of the message and the key contained in the control segment (SC) of the message, and at the end of which:
- if the comparison between the data of the message and the key is unsatisfactory, the recipient actor sends over the network (1) to the sending actor an error message, and returns to the current waiting sequence,
- if the comparison between the data of the message and the key is satisfactory, the recipient actor sends over the network (1) to the sending actor a reception OK message, then uses the data of the message (M).

14. Home automation installation comprising building equipment items associated with actors (4-18) of a home automation network (1) provided with an electronic interface (4a-18a) with communication program, **characterized in that** it comprises a communication device (3) according to any one of Claims 7 to 13.
